# EUROPEAN PATENT SPECIFICATION

(11) **EP 0 583 327 B1**
(45) Date of publication and mention of the grant of the patent: **02.08.1995**
(21) Application number: 92909881.2
(22) Date of filing: 07.05.1992
(51) Int. Cl.: B22C 9/12, A62D 3/00, C07C 209/84

(54) **METHOD AND APPARATUS FOR ELIMINATING VOLATILE AMINES USED IN PREPARING FOUNDRY CORES**
VERFAHREN UND VORRICHTUNG ZUM ELIMINIEREN FLÜCHTIGER AMINE BEIM HERSTELLEN VON GIESSEREIKERNEN
PROCEDE ET APPAREIL D'ELIMINATION D'AMINES VOLATILES UTILISES DANS LA PREPARATION DE NOYAUX DE FONDERIE

(30) Priority: 10.05.1991 IT VI910074
(43) Date of publication of application: 23.02.1994
(73) Proprietor: ECOCHIMICA SYSTEM S.R.L., I-36100 Vicenza (IT)
(72) Inventor: D'EUGENIO, Benito, I-36100 Vicenza (IT)
(74) Representative: Forattini, Amelia
(86) International application number: EP9200992
(87) International publication number: WO9220476

(56) References cited:
- DE-B- 1 758 530
- GB-A- 2 092 583
- US-A- 4 326 082
- FONDERIE no. 53, March 1986, PARIS pages 23 - 26; KUNSCH ,COUDERC:'RECUPERATION DE L'AMINE EN NOYAUTAGE BOITE FROIDE'

## Description

The present invention relates to a method and an apparatus for eliminating volatile amines used in the process for preparing foundry cores.

It is known that the process for preparing foundry cores with the cold-box method uses tertiary amines as catalysts in the curing reaction of the phenolic resins which constitute the binders of the sand. This curing, known as "gas curing", consists of forming polyurethane bonds between the phenolic component and the isocyanic component of the binder, in an extremely short time for allowing a high production rate and a high dimensional precision.

The most commonly used amines are dimethylethylamine (DMEA), dimethylisopropylamine (DMIA) and triethylamine (TEA). DMEA is the most used amine, because it can be used in smaller quantity and allows a short gassing time as well as lower production costs.

The catalysts are introduced in the cores by fluxing with an appropriately preheated carrier gas. The most commonly used carrier gas is compressed air, which in addition to carrying the amine also performs a final flushing of the core boxes.

In order to comply with environment control rules, the carrier gas and the air which contains the amines are aspirated out of the core-making area, and then conveyed to a treatment unit to eliminate the amines. The carrier gas and the air may then be discharged outside in conditions of absolute safety for the environment.

Known processes for the chemical elimination of the amines substantially based on the use of an aqueous solution of acid, for example phosphoric acid. It is in fact known that amines have basic characteristics and, like ammonia, may bond to acids, forming saline compounds.

Exploiting this feature, volatile amines are placed in contact with the chemical reagent, generating complex salts. The acid solution which contains the amine salts, collected in a concentration bath, progressively decreases its neutralizing power down to a selected minimum value which should nevertheless keep the elimination process going. When the solution reaches this minimum value of neutralizing capacity, it is removed from the collection cistern and stored temporarily in a tank. The exhausted reagent is periodically collected with tank trucks by firms specialized in the disposal of special or toxic waste. This firms are usually independent of the foundry.

This solution is onerous, due both to safety and storage expenses and to disposal expenses, and negatively affects the diffusion of amines as a catalyst in the curing of sand binders. Furthermore, the problem of the disposal of the reagents creates a considerable environmental impact, causes administration problems and often forces the manufacturers of the facilities and the suppliers of the raw materials to be responsible for the disposal of the waste.
In order to reduce storage and disposal costs, it had been thought to destroy the amines on the spot by burning the exhausted solution in the melting furnaces of the foundry. This solution was discarded, because it can cause unwanted variations in the quality of the materials being smelted and does not solve the pollution problem due to its polluting fumes.

A further problem of known disposal methods is constituted by the loss of the materials used in the process, which are mainly constituted by the acids, which must be periodically replaced in order to ensure the effectiveness of neutralization, and by the cores, which must be reintegrated in the process. Finally, the entire process requires the addition of heat from outside, increasing energy-related management costs.

The aim of the present invention is to provide a method and an apparatus for eliminating volatile amines which eliminates or at least minimizes the problems described above, eliminating the external disposal of the exhausted or partially exhausted reagents.

An object is to provide a method and an apparatus which allow to recover and recycle much of the raw materials used in the process.

Another object is to minimize energy use, with beneficial effects on the management of the apparatus.

A further object is to maximally exploit the neutralizing power of the reagent by optimizing the various steps of the process.

This aim, these objects and others which will become apparent hereinafter are achieved by a method for eliminating amines for use in the process for preparing foundry cores, of the type which comprises the steps of aspiration and prefiltration of the air which contains the volatile amines, elimination of the amines by salification with a chemical reagent constituted by an acid solution, concentration of the amine salts in the reagent in a reaction bath with progressive reduction of its neutralizing power down to a preset minimum value, removal and storage of the reagent with said preset minimum power, outward discharge of the purified air, characterized in that it has, immediately after the storage step, a step of regeneration by heating of the partially exhausted reagent in order to recover the acid contained therein, followed by a step of direct recycling of the acid recovered during the steps of elimination of the volatile amines and of concentration of the amine salts.

Preferably, after the prefiltration step there is a step for the pre-elimination of the volatile amines in an exhauster by means of partially used reagent, so as to completely exhaust its neutralizing power before sending it to the thermal regeneration step.

In a second aspect, an apparatus for carrying out the above described method is provided which is characterized in that it has, after the storage tank, a reactor for the thermal regeneration of the at least partially exhausted reagent and the recovery of the acid contained therein, a secondary circuit being provided for recycling the acid recovered in the main circuit for the circulation and dosage of the reagent.

The method and apparatus for eliminating amines described above allow to avoid the disposal of the exhausted reagent and to recover the acid used to eliminate the amines, possibly recovering said amines if they are separated without direct combustion during the acid regeneration process.

Furthermore, much of the heat energy required for the operation of the regenerator can be provided by the very combustion of the amines, thus self-sustaining the acid regeneration process.

Finally, the neutralizing power of the reagent is exploited maximally during the pre-elimination step by means of an exhauster which uses partially exhausted reagent.

In this manner, the user does not have to depend on waste disposal companies and must merely provide for the periodic replenishment of the expendable materials, which are unavoidably subject to slow degradation, with a significant reduction of expenses and with a considerable simplification and acceleration of the process management procedures.

These advantages and others will become apparent from the detailed description of an embodiment of a method and apparatus according to the invention, described by way of non-limitative example with the aid of the accompanying drawings, wherein:
Figure 1 is a block diagram of the method according to the invention;
Figure 2 is a schematic diagram of an apparatus according to the invention for the execution of the method of Figure 1;
Figure 3 is a detail view of an alternative embodiment of the apparatus of Figure 2.

With reference to the above figures, step A consists in the prefiltration of the air aspirated out of the core-making area and of the work areas in which the core-forming machines operate. Prefiltration can be performed in one or more centrifugal separators 1, but it is obviously possible to use other per se known filtration methods without thereby abandoning the scope of the invention.

The prefiltered air is subsequently subjected to step B of elimination of the amines by wet methods, by means of the salification of the amines and the concentration of their salts.

For this purpose, the air is conveyed, by means of a pipe 2, to a scrubber which is generally designated by the reference numeral 3.

The scrubber can comprise a plurality of mutually connected stages, specifically an initial stage or Venturi 4 for the intake and elimination of the air which contains the amines, an intermediate stage 5 with a cistern for collecting and recirculating the reagent and for concentrating the amine salts, and a final stage 6 with a tower for the elimination of the residual amines and the outward discharge of the purified air.

In particular, the Venturi stage 4 is shaped like a vertical duct with a tapered portion 7 in which the air, which is fed from the top, reaches the maximum speed and turbulence and creates a certain negative pressure. A nozzle 8 for distributing and nebulizing a chemical reagent is arranged in the neck 7. The reagent is preferably constituted by an aqueous solution of an acid, preferably orthophosphoric acid, which is chosen due to its characteristics which limit the danger for nearby operators.

Due to the turbulence and negative pressure of the air on one hand and of the nebulization of the reagent on the other, a dynamic maximum contact surface is created in the tapered portion 7 of the Venturi tube and facilitates intimate contact between the reayent and the amines, causing the salification of the amines.

The acid solution and the amine salts fall back into the collection cistern 5 of the intermediate stage, which also constitutes a tank from which the reagent is drawn in order to send it to the nozzle 8. In the cistern 5 there are means for measuring the acidity of the solution its density and the concentration of the amine salts, which will be described in greater detail hereinafter.

The process for the chemical elimination of the amines which are present in the air, which begins in the Venturi stage 4, continues in the final tower-shaped stage 6, where the air is drawn upward by the fan 12 which is integrated in the tower.

Alveolate exchange packs 9 are arranged in the lower part of the tower 6 and are suitable to increase the air-reagent exchange surface. A series of nebulizing nozzles 10 sprays the surfaces of the packs 9, and said surfaces wet the air which flows through in countercurrent. Demisters 11 are provided at the intermediate region of the tower 6. Toward the top there, is a centrifugal aspirator 12 which also increases the efficiency of the demisting. The finally purified air exits from the upper outlet 13 of the tower 6, which also acts as sound-deadening box.

The elimination reagent is drawn from the collecting cistern 5 and is sent under pressure toward the nozzles 8 and 10 by means of the pumps 14, 15 and 16.

The chemical process for amine elimination is controlled by monitoring the reagent. The reagent, by binding with the amine, neutralizes and must therefore he replenished. The acidity of the reagent is measured continuously by means of a pH meter 17 equipped with a probe 18 which is immersed in the bath 19 of the cistern 5. The addition of a base, in the specific case of the amines, reduces the acidity of the reagent bath 19.

When the acidity of the bath drops below a certain optimum threshold value which is determined experimentally, the pH meter detects this occurrence and activates an aspirator 20 and an electric valve 21 which transfer fresh acid from a tank 22 to the cistern 5 through a feed line 23.

The water contained in the reagent depletes by evaporation and must therefore be replenished. For this purpose there is a probe 24 which detects the level in the cistern and activates an electric valve 25 for water replenishment.

Automatic control of the reagent is based on the detection of the density and acidity of the acid solution. In fact, the introduction of reagent salifies the amines, causing an increase in the density of the solution which can be detected by means of a density meter 26 which is provided with a probe 27 which is immersed in the bath 19.

The concentration of the amine salts in the reaction bath reduces the amine elimination efficiency in the course of time and therefore must not exceed a given maximum value, preferably comprised between 300 and 350 g/l, beyond which the solution must be considered as practically exhausted.

However, even at the value of maximum salt concentration the solution still contains free acid which can still be used. The density meter 26 prevents the replenishment of the acid and of the water, allowing to exhaust the acid which is still free and the excess water. The density of the solution must not exceed a maximum value which is comprised between 1150 and 1350 g/l and is preferably equal to 1300 g/l, beyond which the solution becomes excessively dense and mud-like and does not bind with the amine easily.

When the pH meter 17 detects an inadequate acidity value, it activates an electric valve 28 located along a line 29 for the transfer E of a preset amount of the exhausted reagent into the storage tank 30.

Once the transfer has ended, the automatic reagent control and dosage device intervenes to restore the solution.

Since control of the process parameters, i.e. density, level and pH of the solution, occurs continuously and automatically, the apparatus is never halted and can operate constantly in the best conditions of efficiency.

Conveniently, according to the invention, there is a step F of regeneration by heating of the acid of the reagent, accompanied by the destruction or recovery of the amines.

For this purpose, a reactor 31 is connected downstream from the storage tank 30 by means of a feed line 32 and a pump 33. The reactor 31 separates the acid and recovers it by means of thermal processes. The heat can be supplied from outside, for example by means of a heater 34, controlling the temperature by means of heat probed 35 immersed in the regeneration bath.

If one does not wish to recover the amines, they can be collected with an aspirator 38 and sent to the burner of the heater 34 to be burned with excess air in step G'.
In this case, the amines oxidize according to the following reaction:

4 C₂H₅N(CH₃)₂ + 27 O₂ → 16 CO₂ + 2 N₂ + 22H₂O

Thus, once the reactor has been raised to the normal running temperature, which is required in order to trigger the thermal regeneration of the acid, the heat released by the combustion of the amines is sufficient to self-sustain the regeneration process, with an evident energy saving. The fumes produced in the reactor 31 are conveyed again toward the scrubber 3 through the line 39 which connects to the main polluted-air line 2.

If one wishes to recover the amines, they can be separated by pyrolysis and by adding heat from outside, and are collected in a separate tank, not shown in the drawings, in order to be recycled in the preparation of the cores.

In this case, the amines are released according to the reaction 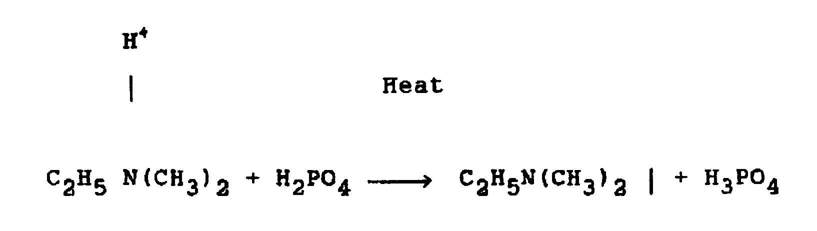
The recovered acid is drawn by the pump 36 and returned to the Venturi stage 4 of the scrubber 3 by means of the line 37.

In this manner, the cycle is completed and the operation of the scrubber is substantially continuous, with no addition of acid from outside or production of waste to be disposed.

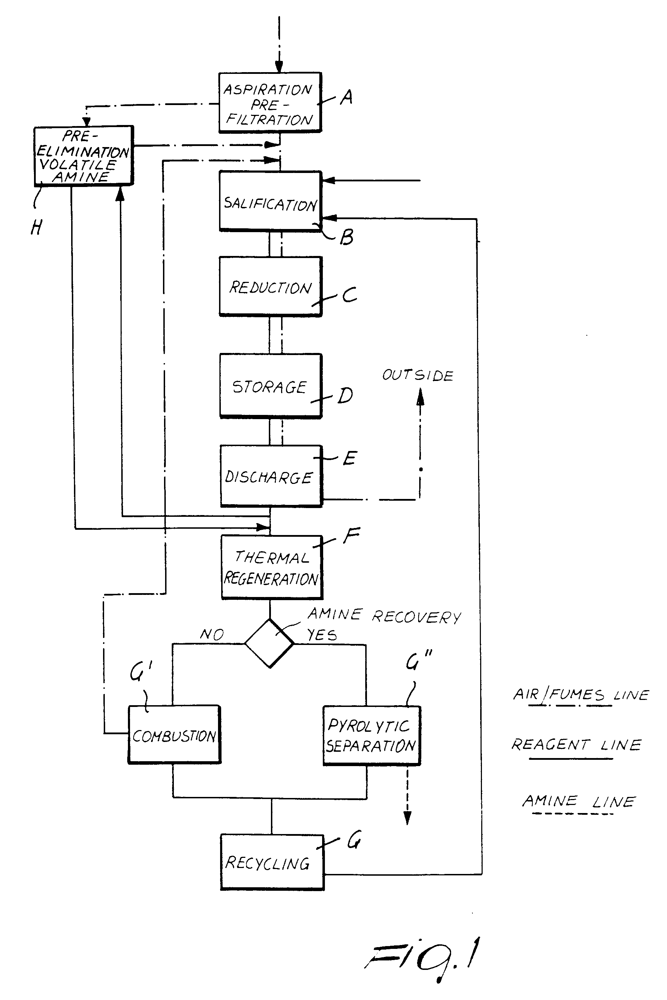

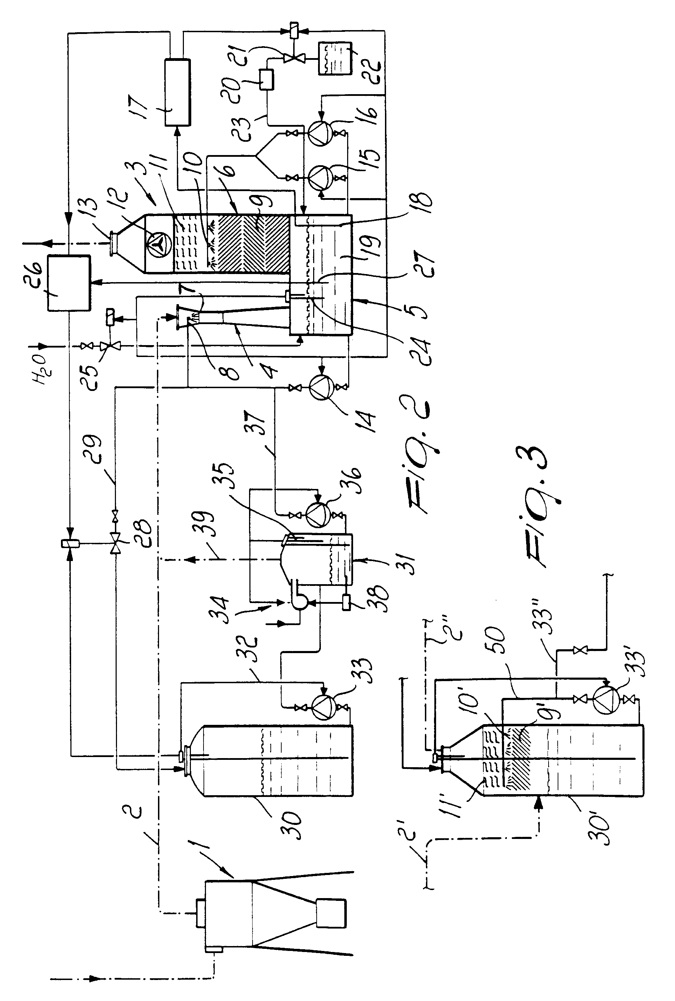

Since the reagent in exhausted conditions still has a residual neutralizing power, in order to exploit it fully it is possible to introduce a step H of complete exhaustion by means of an exhauster shown in Figure 3.

The exhauster 30' consists essentially of the storage tank 30 of Fig.2 which is conveniently modified like the tower stage 6 of the scrubber 3. In particular, there are alveolate packs 9', which are wet by the reagent sprayed by nozzles 10' and pumped by the pump 33' through the line 50, over which demisters 11' are superimposed.

After prefiltration through the centrifugal separator or separators 1, the amine-rich air is fed into the side wall of the exhauster and is drawn upward by the aspirator 12, passing through the alveolate packs 9' and the demisters 11'. The amines are partially salified by the reagent which is still partially active, and are eliminated in the lower part of the exhauster 30' while the air flows out of the upper part and is conveyed through the line 2'' toward the initial stage 4 of the scrubber.

Although the step H of pre-elimination in the exhauster 30' has a limited effectiveness, it nonetheless allows to maximally exploit the residual neutralizing power of the reagent. Thus, it is possible to draw the reagent from the cistern 5 when it is still active enough, since it will be in any case possible to exploit it in the exhauster.

The part of the apparatus which is downstream from the exhauster 30' remains substantially unchanged, so that the exhauster also performs the function of storage tank as in the apparatus of Figure 2.

## Claims

1. Method for eliminating volatile amines used in the preparation of foundry cores, comprising the steps of:
(A) aspiration and prefiltration of the air which contains the volatile amines;
(B) elimination of the amines by salification with a chemical reagent constituted by an acid solution;
(C) concentration of the amine salts in the reagent in a reaction bath with progressive reduction of the neutralizing power of the acid solution;
(D) removal and storage of the partially exhausted reagent with a selected residual neutralizing power;
(E) outward discharge of the purified air;
characterized in that it comprises, immediately after the storage step (D), a step (F) of regeneration by heating of the partially exhausted reagent in order to recover the acid contained therein, followed by a step (G) of recycling of the acid recovered during the steps of elimination of the volatile amines and of concentration of the amine salts.

2. Method according to claim 1, characterized in that during the step (F) of regeneration by heating of the reagent, the amines are eliminated by means of a step (G') of combustion in excess air, according to the reaction
4 C₂H₅N(CH₃)₂ + 27 O₂ → 16 CO₂ + 2 N₂ + 22H₂O

3. Method according to claim 1, characterized in that during the reagent regeneration by heating step (F) the amines are separated pyrolytically (G'') according to the reaction

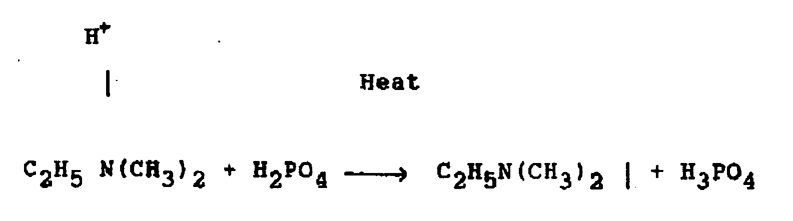

4. Method according to claim 1, characterized in that the neutralizing power of the reagent is controlled by means of continuous measurements of the pH, of the density of the solution and of the concentration of the amine salts in the reaction bath.

5. Method according to claim 4, characterized in that the reagent is drawn from the reaction bath at a maximum bath density comprised between 1100 and 1350 g/l.

6. Method according to claim 5, characterized in that the reagent is considered an partially exhausted at a maximum amine salt concentration comprised between 300 and 350 g/l.

7. Method according to claim 1, characterized in that it comprises, after the prefiltration step (A), a step (H) of pre-elimination of the volatile amines by means of partially exhausted reagent, so as to completely exhaust its neutralizing power before sending it to the thermal regeneration step (F).

8. Apparatus for carrying out the method according to one or more of claims 1 to 7, characterized in that it comprises:
-- a prefiltration device (1) for the air which is aspirated from the work areas and contains the amines;
-- a main circuit (14, 15, 16, 20, 21, 22) for the circulation and dosage of a chemical reagent for amine elimination;
-- means for conveying the polluted and prefiltered air toward a section for the elimination of the volatile amines, wherein said section comprises:
-- a scrubber (3) which has an intake portion (4) for the amine-containing air, which is suitable to facilitate turbulence and intimate contact between the volatile amines and the reagent, a cistern (5) for collecting the reagent and for concentrating the amine salts, and an outlet portion with a tower (6) for a final purification of the air and for discharging it outside;
-- a storage tank (30) for the at least partially exhausted reagent drawn from the tank (5) of the amine salt concentration bath;
characterized in that it has, downstream from the storage tank (30), a reactor (31) for the thermal regeneration of the at least partially exhausted reagent and for the recovery of the acid contained therein, a secondary circuit (36, 37) being provided for recycling the acid recovered in the main circuit for reagent circulation and dosage.

9. Apparatus according to claim 8, characterized in that it has control means (17, 20, 21, 24, 26, 27) for the continuous measurement and adjustment of the acidity and density of the reagent and for controlling the concentration of the amine salts.

10. Apparatus according to claim 8, characterized in that it has means (28) for the periodic transfer of the at least partially exhausted reagent into said storage tank (30) at a preset minimum value of its neutralizing power which is measured by said control means (17, 20, 21, 24, 26, 27) .

11. Apparatus according to claim 10, characterized in that said thermal regenerator (31) comprises means for the combustion of the amines under excess air, means for recovering the heat generated by said combustion, adjusted so as to self-sustain thermal regeneration, as well as means (39) for conveying the combustion fumes to the intake portion (4) of the scrubber.

12. Apparatus according to claim 11, characterized in that said thermal regenerator reactor (31) comprises means for recovering the amines by pyrolysis and by adding heat from outside.

13. Apparatus according to one or more of the preceding claims, characterized in that it has an exhauster (30') for the pre-elimination of the volatile amines by means of contact with the partially exhausted reagent before it is sent to said thermal regenerator (31).

## Patentansprüche

1. Verfahren zur Entfernung flüchtiger Amine, die bei der Herstellung von Gießkernen verwendet werden, enthaltend die Schritte:
(A) Absaugung und Vorfiltrierung der Luft, welche die flüchtigen Amine enthält:
(B) Entfernung der Amine durch Salzbildung mit einem chemischen Reagens, das durch eine Säurelösung gebildet ist;
(C) Konzentration der Aminsalze in dem Reagens in einem Reaktionsbad unter zunehmender Verminderung des Neutralisationsvermögens der Säurelösung;
(D) Entfernung und Lagerung des teilweise erschöpften Reagens mit einem gewählten Rest-Neutralisationsvermögen;
(E) Auslaß der gereiningten Luft ins Freie;
dadurch gekennzeichnet, daß es unmittelbar nach dem Lagerungs-Schritt (D) einen Schritt (F) der Regenerierung des teilweise erschöpften Reagens durch Erhitzen enthält, um die darin enthaltene Säure zurückzugewinnen, gefolgt von einem Schritt (G) der Wiederverwendung der zurückgewonnenen Säure in den Schritten der Entfernung der flüchtigen Amine und der Konzentration der Aminsalze.

2. Verfahren nach Anspruch 1, dadurch gekennzeichnet, daß während des Schrittes (F) der Regenerierung des Reagens durch Erhitzen die Amine durch einen Schritt (G') der Verbrennung mit Luftüberschuß nach der Reaktion
4 C₂H₅N(CH₃)₂ + 27 O₂ → 16 CO₂ + 2 N₂ + 22 H₂O
entfernt werden.

3. Verfahren nach Anspruch 1, dadurch gekennzeichnet, daß während des Schrittes (F) der Regenerierung des Reagens durch Erhitzen die Amine pyrolytisch (G'') nach der Reaktion 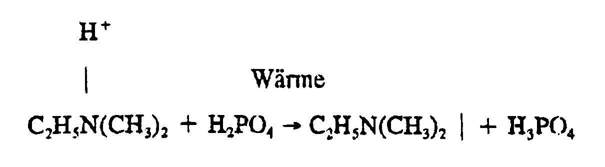 abgetrennt werden.

4. Verfahren nach Anspruch 1, dadurch gekennzeichnet, daß das Neutralisationsvermögen des Reagens durch ständige Messungen des pH-Wertes, der Dichte der Lösung und der Konzentration der Aminsalze im Reaktionsbad überwacht wird.

5. Verfahren nach Anspruch 4, dadurch gekennzeichnet, daß das Reagens dem Reaktionsbad bei einer maximalen Baddichte zwischen 1100 und 1350 g/l entzogen wird.

6. Verfahren nach Anspruch 5, dadurch gekennzeichnet, daß das Reagens bei einer maximalen Aminsalzkonzentration zwischen 300 und 350 g/l als teilweise erschöpft angesehen wird.

7. Verfahren nach Anspruch 1, dadurch gekennzeichnet, daß es nach dem Vorfiltrierungsschritt (A) einen Schritt (H) der Vorentfernung flüchtiger Amine mittels eines teilweise erschöpften Reagens enthält, um dessen Neutralisationsvermögen vollständig zu erschöpfen, bevor es dem Schritt der thermischen Regenerierung (F) zugeführt wird.

8. Vorrichtung zur Durchführung des Verfahrens nach einem oder mehreren der Ansprüche 1 bis 7, dadurch gekennzeichnet, daß sie enthält:
-- eine Vorfiltierungseinrichtung (1) für die Luft, die aus den Arbeitsbereichen abgesaugt wird und Amine enthält;
-- einen Hauptkreislauf (14,15,16,20,21,22) für den Umlauf und die Dosierung eines chemischen Reagens zur Aminentfernung;
-- Mittel zum Transport der verschmutzten und vorfiltierten Luft zu einer Stufe der Entfernung der flüchtigen Amine, wobei diese Stufe enthält:
-- einen Wäscher (3) mit einem Einlaßabschnitt (4) für die aminhaltige Luft, der geeignet ist, die Turbulenz und einen innigen Kontakt zwischen den flüchtigen Aminen und dem Reagens zu erleichtem, einem Vorratsbehälter (5) zum Sammeln des Reagens und zur Konzentration der Aminsalze und einem Auslaßschnitt mit einem Turm (6) zur Endreinigung der Luft und zu deren Auslaß ins Freie;
-- einen Vorratstank (30) für das zumindest teilweise erschöpfte, aus dem Tank (5) des Aminsalz-Konzentrationbades entnommene Reagens;
dadurch gekennzeichnet, daß sie stromab vom Vorratstank (30) einen Reaktor (31) zur thermischen Regenerierung des zumindest teilweise erschöpften Reagens und zur Rückgewinnung der darin enthaltenen Säure aufweist, wobei ein Sckundärkreislauf (36,37) vorgesehen ist zur Wiederverwendung der zurückgewonnenen Säure im Hauptkreislauf für den Umlauf und die Dosierung des Reagens.

9. Vorrichtung nach Anspruch 8, dadurch gekennzeichnet, daß sie Überwachungseinrichtungen (17,20,21,24,26,27) zur ständigen Messung und Einstellung des Säuregehaltes und der Dichte des Reagens sowie zur Überwachung der Konzentration der Aminsalze aufweist.

10. Vorrichtung nach Anspruch 8, dadurch gekennzeichnet, daß sie Mittel (28) zur periodischen Überleitung des zumindest teilweise erschöpften Reagens in den Vorratstank (30) bei einem vorgegebenen Minimalwert seines Neutralisationsvermögens aufweist, das durch die Überwachungsmittel (17,20,21,24,26,27) gemessen wird.

11. Vorrichtung nach Anspruch 10, dadurch gekennzeichnet, daß der thermische Regenerator (31) Mittel zur Verbrennung der Amine unter Luftüberschuß, Mittel zur Rückgewinnung der durch die Verbrennung erzeugten, zur Selbsterhaltung der thermischen Regenerierung eingestellten Wärme sind, sowie Mittel (39) zum Transport der Verbrennungsabgase zum Einlaßbereich (4) des Wäschers aufweist.

12. Vorrichtung nach Anspruch 11, dadurch gekennzeichnet, daß der thermische Regenerierungsreaktor (31) Mittel zur Rückgewinnung der Amine durch Pyrolyse und durch Zufuhr von Wärme von außen aufweist.

13. Vorrichtung nach einem oder mehreren der vorhergehenden Ansprüche, dadurch gekennzeichnet, daß sie einem Exhaustor (30') aufweist zur Vorentfernung flüchtiger Amine durch Kontakt mit dem teilweise erschöpften Reagens, bevor dieses dem thermischen Regenerierer (31) zugeführt wird.

## Revendications

1. Procédé d'élimination d'amines volatiles utilisées dans la préparation de noyaux de fonderie, comprenant les étapes suivantes:
(A) aspiration et préfiltration de l'air qui contient les amines volatiles;
(B) élimination des amines par salification avec un réactif chimique constitué d'une solution acide;
(C) concentration des sels d'amine dans le réactif, dans un bain réactionnel, avec réduction progressive de la force de neutralisation de la solution acide;
(D) élimination et stockage du réactif partiellement épuisé avec une force de neutralisation résiduelle sélectionnée;
(E) décharge vers l'extérieur de l'air purifié;
caractérisé en ce qu'il comprend, immédiatement après l'étape de stockage (D), une étape (F) de régénération par chauffage du réactif partiellement épuisé afin de récupérer l'acide qu'il contient, suivie d'une étape (G) de recyclage de l'acide récupéré au cours des étapes d'élimination des amines volatiles et de concentration des sels d'amine.

2. Procédé selon la revendication 1, caractérisé en ce que, pendant l'étape (F) de régénération par chauffage du réactif, les amines sont éliminées au moyen d'une étape (G') de combustion dans un excès d'air, selon la réaction
4 C₂H₅N(CH₃)₂ + 27 O₂ → 16 CO₂ + 2 N₂ + 22 H₂O

3. Procédé selon la revendication 1, caractérisé en ce que, pendant l'étape (F) de régénération par chauffage du réactif, les amines sont séparées par pyrolyse (G'') selon la réaction

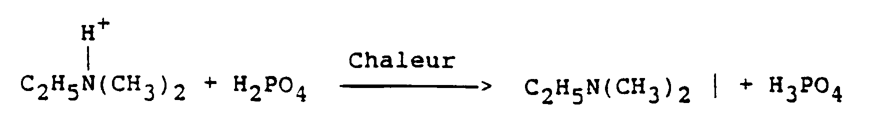

4. Procédé selon la revendication 1, caractérisé en ce que la force de neutralisation du réactif est contrôlée au moyen de mesures continues du pH, de la masse volumique de la solution et de la concentration des sels d'amine dans le bain réactionnel.

5. Procédé selon la revendication 4, caractérisé en ce que le réactif est soutiré du bain réactionnel à une masse volumique maximale du bain comprise entre 1 100 et 1 350 g/l.

6. Procédé selon la revendication 5, caractérisé en ce que le réactif est considéré comme étant partiellement épuisé à une concentration maximale en sel d'amine comprise entre 300 et 350 g/l.

7. Procédé selon la revendication 1, caractérisé en ce qu'il comprend, après l'étape de préfiltration (A), une étape (H) de pré-élimination des amines volatiles au moyen d'un réactif partiellement épuisé, de manière à épuiser totalement sa force de neutralisation avant de le renvoyer vers l'étape de régénération thermique (F).

8. Appareil pour mettre en oeuvre le procédé selon l'une quelconque des revendications 1 à 7, caractérisé en ce qu'il comprend:
- un dispositif de préfiltration (1) pour l'air qui est aspiré des zones de travail et qui contient les amines;
- un circuit principal (14, 15, 16, 20, 21, 22) pour la circulation et le dosage d'un réactif chimique pour l'élimination des amines;
- un dispositif pour transporter l'air pollué et préfiltré vers une section d'élimination des amines volatiles, ladite section comprenant:
- un épurateur (3) qui possède une partie d'admission (4) pour l'air contenant les amines, adapté pour faciliter une turbulence et un contact intime entre les amines volatiles et le réactif, une citerne (5) servant à recueillir le réactif et à concentrer les sels d'amine, et une partie d'échappement avec une tour (6) servant à la purification finale de l'air et à sa décharge vers l'extérieur;
- un réservoir de stockage (30) pour le réactif au moins partiellement épuisé soutiré de la cuve (5) du bain de concentration des sels d'amine;
caractérisé en ce qu'il possède, en aval du réservoir de stockage (30), un réacteur (31) servant à la régénération thermique du réactif au moins partiellement épuisé et à récupérer l'acide qu'il contient, un circuit secondaire (36, 37) étant prévu pour recycler l'acide récupéré dans le circuit principal servant à la circulation et au dosage du réactif.

9. Appareil selon la revendication 8, caractérisé en ce qu'il possède un moyen de contrôle (17, 20, 21, 24, 26, 27) servant à la mesure et à l'ajustement en continu de l'acidité et de la masse volumique du réactif, et au contrôle de la concentration des sels d'amine.

10. Appareil selon la revendication 8, caractérisé en ce qu'il possède un moyen (28) servant au transfert périodique du réactif au moins partiellement épuisé dans ladite cuve de stockage (30) à une valeur minimale prédéterminée de sa force de neutralisation qui est mesurée à l'aide de ce moyen de contrôle (17, 20, 21, 24, 26, 27).

11. Appareil selon la revendication 10, caractérisé en ce que ledit régénérateur thermique (31) comprend un moyen servant à la combustion des amines avec un excès d'air, un moyen servant à récupérer la chaleur dégagée par ladite combustion, ajusté de manière à auto-entretenir la régénération thermique, ainsi qu'un moyen (39) servant a transporter les fumées de combustion vers la partie d'admission (4) de l'épurateur.

12. Appareil selon la revendication 11, caractérisé en ce que ledit réactif régénérateur thermique (31) comprend un moyen servant à récupérer les amines par pyrolyse et par apport extérieur de chaleur.

13. Appareil selon l'une quelconque des revendications précédentes, caractérisé en ce qu'il possède un extracteur (30') servant à la pré-élimination des amines volatiles au moyen d'un contact avec le réactif partiellement épuisé avant qu'il soit envoyé vers ledit régénérateur thermique (31).
